## Europäisches Patentamt

## European Patent Office

## Office européen des brevets

(11) Publication number: **0 206 522**
**B1**

(12) **EUROPEAN PATENT SPECIFICATION**

(45) Date of publication of the patent specification:
09.08.89

(21) Application number: 86303862.6

(22) Date of filing: 21.05.86

(51) Int. Cl.⁴: **C11D 3/00**, C11D 17/00,
C11D 3/18, C11D 3/37

(54) Antifoam ingredient for detergent compositions.

(30) Priority: 23.05.85 GB 8513074

(43) Date of publication of application:
30.12.86 Bulletin 86/52

(45) Publication of the grant of the patent:
09.08.89 Bulletin 89/32

(84) Designated Contracting States:
CH DE FR GB IT LI NL SE

(56) References cited:
EP-A- 0 000 216
EP-A- 0 071 481
EP-A- 0 109 247
FR-A- 2 559 400
US-A- 4 451 387

(73) Proprietor: UNILEVER PLC, Unilever House Blackfriars
P.O. Box 68, London EC4P 4BQ(GB)
(84) Designated Contracting States: GB

(73) Proprietor: UNILEVER NV, Burgemeester
s'Jacobplein 1 P.O. Box 760, NL-3000 DK Rotterdam(NL)
(84) Designated Contracting States: CH DE FR IT LI NL SE

(72) Inventor: Foret, Roger, 44 rue de la Cossetterie,
Escobecques(FR)
Inventor: Tai, Ho Tan, 5 rue G.Tell, F-59000 Lille(FR)

(74) Representative: Fransella, Mary Evelyn et al, Unilever
PLC Patents Division P.O. Box 68 Unilever House,
London EC4P 4BQ(GB)

**Description**

TECHNICAL FIELD

The invention relates to an antifoam ingredient which is particularly suitable for incorporation into powdered detergent products, and to processes for the production of the antifoam ingredient.

BACKGROUND

Detergent products comprising anionic and/or nonionic surfactants which are particularly suitable for fabric washing generally have a tendency in use to produce excessive foam. This can be a problem particularly with drum-type washing machines, and it is accordingly usual to include an antifoam agent in the detergent formulation to reduce or eliminate this tendency to produce excessive foam.

Excessive foam derived from detergent products containing anionic and/or nonionic surfactants can for example be controlled to a limited extent by the addition of soap, or by the incorporation of certain hydrocarbons, silicone oils or hydrophobic silica, or mixtures thereof.

It has for example been proposed in FR-A-2 416 946 to provide a suds regulating (i.e. antifoam) agent containing a special mixture of liquid hydrocarbon with either a solid hydrocarbon or a fatty acid ester, together with a hydrophobic silica. An example of such an agent contains 30 to 98% by weight of a liquid hydrocarbon, 70 to 2% by weight of an auxiliary substance selected from normally solid hydrocarbons having a melting point of from 35 to 100°C and long chain fatty acid esters of fatty alcohols, or mixtures thereof, together with from 0.1 to 25% by weight of hydrophobic silica.

Such antifoam agents are however difficult to stabilise in a detergent powder in such a manner that their ability to control excessive foam production in a laundry washing process is retained, particularly after storage of the detergent powder prior to use. It is accordingly desirable to incorporate the antifoam agents in the detergent powder during manufacture in a form in which they are protected against premature deactivation during storage, so that their effectiveness in controlling excessive foam production, both at low and at high washing temperatures, is not diminished.

One means of employing such antifoam agents in a detergent powder, while ensuring some measure of protection against premature deactivation, is to provide particles comprising a water-dispersible core material as a carrier for the antifoam agents.

Although such antifoam particles are highly effective in reducing the tendency of a freshly manufactured detergent product to produce excessive foam, there is still a risk that the antifoam activity will diminish on storage in a detergent powder. This is believed to be due to migration of some of the antifoam active substances, particularly those of an oily nature, from the core material into the surrounding powder or even the packaging material. This can happen more rapidly when such powders are stored at temperatures above room temperature (20°), and after a period of storage of a few weeks the activity of the antifoam agent can be severely impaired.

EP-A 71 481 describes antifoam particles in which a core carries a mixture of silicone oil and hydrophobic silica as antifoam active and is coated with a layer of wax as a coating to retain the antifoam active substance within. The type of coating chiefly described is a coherent coating applied by spraying a solution of wax in an organic solvent which is allowed to evaporate. Use of molten wax is mentioned as a possible alternative.

THE INVENTION

This invention provides a particulate antifoam ingredient suitable for incorporation into a detergent powder composition, said ingredient comprising particles which are capable of swelling, dissolving or disintegrating on contact with water, said particles comprising a core carrying a low-temperature-sensitive antifoam active substance, and also including high-temperature-sensitive antifoam active substance, which particles have a coating surrounding the core of material, the coating comprising a mixture of wax and hydrophobic silica providing a coating which is impervious while in the dry state, yet which is capable of disruption on contact with water thereby to release the antifoam active substance(s), the particles having a mean particle diameter of up to 2,00 µm.

The particles of the invention include both low and high-temperature-sensitive antifoam active substances. The low-temperature-sensitive substance is carried by the core. High-temperature-sensitive antifoam active substance is also present. The coating material will generally be effective as a high-temperature-sensitive active substance. High-temperature-sensitive antifoam active substance may also be carried by the core: and indeed it may be included when making core particles.

THE CORE

The core of the antifoam particles according to the invention provides a support for both high- and/or low-temperature sensitive antifoam active substances.

Preferred examples of materials from which the core may be formed include:

(i) gelatinised starch, which possesses the ability to swell rapidly on addition to water resulting in a break up of the structure of the core thereby releasing the antifoam active substance carried by the core;

(ii) sodium perborate monohydrate, which possesses the ability to dissolve rapidly on addition to water with evolution of gas, thereby releasing antifoam active substance carried by the core;

(iii) zeolite cation exchanger, which is capable of disintegrating on addition to water thereby releasing antifoam active substance; a preferred example of a zeolite cation exchanger that behaves in this way is HAB 40, available from Degussa;

(iv) water-soluble salts, such as sodium tripolyphosphate and sodium sulphate, in admixture with hydrophobic silica and/or paraffin wax having a melting point of from 45° to 80°C, and gelatinised starch; and

(v) hydrophobic silica and/or paraffin wax having a melting point of from 45° to 80°C, and gelatinised starch.

The core of the antifoam particles forms from 10 to 95%, preferably from 30 to 90% and most preferably from 40 to 70% by weight of the particles.

THE LOW TEMPERATURE SENSITIVE ANTIFOAM ACTIVE SUBSTANCE

The core of the antifoam particles according to the invention carries a low temperature sensitive antifoam active substance which is normally oily and which will normally be liquid at temperatures of from 20° to 50°C; the low temperature sensitive antifoam active substance is accordingly capable of controlling foam production of a detergent powder product when used in the washing of fabrics at or above room temperature. Although the oily antifoam active substance can function in this way at any wash temperature, it is particularly adapted for use in controlling foam production at low wash temperatures of from 20° to 50°C.

Preferred examples of low temperature sensitive antifoam active substances include:

(i) non-volatile silicone oils, preferably with solid partiles such as hydrophobic silica, for example Sipernat D10, the mixture being sold as Silicone DB 100 available from Dow Corning; silicone oils 47v 100, 47v 5000 and 47v 12500 available from Rhone Poulenc; Silcolapse 430 and Silicone EP 6508 available from ICI; and Rhodosil 454 available from Rhone Poulenc; Silkonol AK 100 available from Wacker.

(ii) normally liquid hydrocarbon materials, that is hydrocarbons which are normally liquid at room temperature (20°C), such as hydrocarbons usually having a melting point of from -40°C to 5°C and usually containing from 12 to 40 carbon atoms in the molecule. The normally liquid hydrocarbon will usually have a minimum boiling point of not less than 110°C. Liquid paraffins, preferably of the naphthenic or paraffinic type, also known as mineral white oil are preferred.

Particularly preferred examples are chosen from mineral oils such as spindle oil (Velocite 6 : Mobil), paraffin oil and other liquid oils such as those in the WTO to 5 series as available from British Petroleum. Such hydrocarbons can be provided with solid particles such as hydrophobic silica, for example Sipernat D10.

The amount of low temperature sensitive antifoam active substance carried by the core can be from 1 to 95%, preferably 1 to 30% and most preferably from 5 to 20% by weight of the antifoam particles.

THE HIGH TEMPERATURE SENSITIVE ANTIFOAM ACTIVE SUBSTANCE

The core of the antifoam particles according to the invention can also carry a high temperature sensitive antifoam active substance which is normally waxy and which will normally have a melting point of 35°C or above; the high temperature sensitive antifoam active substance is accordingly capable of controlling foam production of a detergent powder product when used in the washing of fabrics above 35°C especially at high wash temperature of 50 to 80°C. Such waxy substance can also contain solid particles such as hydrophobic silica, for example Sipernat D10.

Preferred examples of high temperature sensitive antifoam active substances include:

(i) hydrocarbon materials which will normally be solid at temperatures of up to 35°C and which are accordingly capable of controlling foam production of a detergent powder product which is used in the washing of fabrics at or above this temperature. The normally solid hydrocarbon material is particularly adapted for use in controlling foam production at high wash temperatures of from 50° to 80°C. Such normally solid hydrocarbons are preferably chosen from paraffin waxes or microcrystalline waxes having a melting point of from 35° to 110°C. It is preferable to employ at least two normally solid hydrocarbon materials, one having a melting point of from 35° to 45°C, and another having a slightly higher melting point of from 46° to 80°C;

(ii) fatty esters such as esters of mono- or polyhydric alcohols having from 1 to 40 carbon atoms in the hydrocarbon chain, and mono- or polycarboxylic acids having from 1 to 40 carbon atoms in the hydrocarbon chain with the provisos that the total number of carbon atoms in the ester is equal or >16 and that at least one of the alkyl radicals in the ester has 12 or more carbon atoms.

Such fatty esters when employed can be of natural or synthetic origin. Examples of suitable natural fatty esters include bees wax, carnauba wax and spermaceti.

Examples of synthetic fatty esters that can be employed include ethylene glycol, glycerol and sorbitan esters, in which the fatty acid portion of the ester is chosen from behenic acid, stearic acid, oleic acid, palmitic acid or myristic acid. Further preferred fatty esters are glycerol esters such as glycerol monostearate, glycerol monooleate, glycerol monopalmitate, glycerol monobehenate and glycerol distearate.

The amount of high temperature sensitive antifoam active substance carried by the core can be from 1 to 70%, preferably from 5 to 50% and most preferably from 10 to 35% by weight of the antifoam particles.

PROMOTER FOR ANTIFOAM ACTIVE SUBSTANCES

As has already been stated, the low - and high - temperature sensitive antifoam active substance can also include solid particles to act as an antifoam promoter. These are preferably hydrophobic silica materials usually having an average primary particle diameter of 5nm to 100nm, preferably from 10nm to 30nm. The primary particles can form aggregates having an average particle diameter of from $0.3\mu m$ to $3\mu m$. Suitable silica materials can additionally be characterised by a specific surface area of from $50m^2/g$ to $400m^2/g$, preferably from $100m^2/g$ to $200m^2/g$.

Preferred examples of hydrophobic silica are Sipernat D10 (Degussa), Silica QUSO WR 82 (Philadephia Quartz Co) and preagglomerated silica. Further examples of suitable silica materials include pyrogenic silica, aerogel and xerogel silicas, provided that their general physical properties are in accordance with the values given above.

Alternative solid particulate antifoam promoters include plastics such as polyethylene, polypropylene and polytetrafluorethylene.

THE COATING

The coating of the antifoam particles, according to the invention, which surrounds the core comprises a substance which is impervious to oily antifoam active substance carried by the core while the particles are in the dry state, yet which is capable of disruption on contact with water thereby to enable the oily antifoam active substance to come into contact with water, for example under wash conditions.

The coating wax can be a wax exemplified hereinbefore as high temperature sensitive antifoam active substance. Such waxy material should form an interrupted coating that will allow water to pass through under wash conditions, yet will retain any oily antifoam active substance carried by the core, while the antifoam ingredient is in the dry state. Such an interrupted coating can be formed, for example, by spraying the core with finely divided melted waxy material admixed with hydrophobic silica.

The amount of the material which provides the coating should be from 1 to 70%, preferably from 5 to 50% and most preferably from 10 to 35% by weight of the antifoam particles.

The antifoam particles of the invention should preferably include both low- and high-temperature antifoam active substances to provide sequential foam control from low to high wash temperatures, the core having a coating which is primarily intended to seal within the particle any oily antifoam active substance so as to prevent its premature loss during storage in the dry state. The mean particle diameter of the antifoam particles of the invention will normally be up to $2,000\mu m$.

MEAN PARTICLE DIAMETER

It is preferable for optimum stability of a detergent powder containing the antifoam ingredient that the antifoam ingredient should comprise at least 90% by weight of particles having a mean particle diameter of at least $400\mu m$. Preferably, the antifoam ingredient should comprise at least 90% by weight of particles having a mean particle diameter of $>400\mu m$. Most preferably the mean particle diameter of at least 90% by weight of the antifoam ingredient should be from $600\mu m$ to $2000\mu m$, the greater the diameter within this range, the more stable is the antifoam ingredient when incorporated into detergent powder mixes. It is thus apparent that a mean particle diameter of $700\mu m$ is better than $600\mu m$, $800\mu m$ is better than $700\mu m$, $900\mu m$ is better than $800\mu m$, $1000\mu m$ is better than $900\mu m$ and likewise in $100\mu m$ increments up to and including $2000\mu m$ or above. The ideal antifoam ingredient possesses at least 90% of particles having a mean particle diameter of from $800\mu m$ to $2000\mu m$.

It is to be understood that the antifoam particles as herein defined in terms of their mean diameter can be discrete particles, also known as primary particles, or agglomerated groups of particles, also known as secondary particles or agglomerates.

## PROCESSES FOR MANUFACTURE OF ANTIFOAM PARTICLES

A further aspect of the invention provides four alternative processes for manufacturing the antifoam ingredient according to the invention, which is suitable for use in detergent powder products. According to this aspect of the invention, firstly, there is provided a process for the production of the antifoam ingredient which comprises the steps of:

(a) spraying a molten mixture of paraffin wax having a melting point of from 45° to 80°C together with a hydrophobic silica onto finely divided water-soluble salt chosen from sodium tripolyphosphate, sodium sulphate or mixtures thereof, and thereafter adding finely divided gelatinised starch with mixing to obtain core particles;
(b) spraying the core particles so obtained with an oily antifoam active substance and
(c) subsequently spraying the particles with a mixture of wax and hydrophobic silica to form a coating, thereby to form the particulate antifoam ingredient.

Secondly, there is provided a process for the production of antifoam particles which comprises the steps of:

(a) spraying a molten mixture of wax having a melting point of from 45 to 80°C together with hydrophobic silica onto finely divided sodium perborate monohydrate to obtain core particles;
(b) spraying the core particles so obtained with an oily antifoam active substance; and
(c) subsequently spraying the particles with a mixture of wax and hydrophobic silica to form a coating, thereby to form the particulate antifoam ingredient.

Thirdly, there is provided a process for the production of antifoam particles which comprises the steps of:

(a) spraying a molten mixture of wax having a melting point of from 45 to 80°C together with hydrophobic silica onto zeolite cation exchanger to provide core particles;
(b) spraying the core particles so obtained with an oily antifoam active substance; and
(c) subsequently spraying the particles with a mixture of wax and hydrophobic silica to form a coating, thereby to form the particulate antifoam ingredient.

Fourthly, there is provided a process for the production of antifoam particles which comprises the steps of:

(a) spray-cooling a molten mixture of wax having a melting point of from 45° to 80°C together with hydrophobic silica to form spheroids of solidified wax and silica, and then mixing said spheroids with finely divided gelatinised starch to obtain core particles;
(b) spraying the core particles so obtained with an oily antifoam active substance; and
(c) subsequently spraying the particles with a mixture of wax and hydrophobic silica to form the a coating, thereby to form the particulate antifoam ingredient.

In any of these processes, particles having the required mean particle diameter can be selected by classifying, for example by sieving, the antifoam particles, or the core particles onto which the antifoam active agent is sprayed or otherwise applied.


## DETERGENT COMPOSITIONS

The antifoam ingredient according to the invention is particularly suitable for incorporation in a detergent powder composition, in which case, such a composition can comprise from 0.1 to 5%, preferably from 0.2 to 3% and most preferably from 0.5 to 2% by weight of the antifoam ingredient.

### Detergent active compounds

A detergent composition which is particularly suited to the incorporation of an antifoam ingredient according to the invention will generally comprise one or more detergent active compounds which can be chosen from soap and non-soap anionic, cationic, nonionic, amphoteric or zwitterionic detergent active compounds, and mixtures thereof. Many suitable detergent-active compounds are commercially available and are fully described in the literature, for example in "Surface Active Agents and Detergents", Volumes I and II, by Schwartz, Perry and Berch.

The preferred detergent-active compounds which can be used are soaps and synthetic non-soap anionic and nonionic compounds.

Soap is a water-soluble or water-dispersible alkali metal salt of an organic acid, and the preferred soaps are sodium or potassium salts, or the corresponding ammonium or substituted ammonium salts of an organic acid. Examples of suitable organic acids are natural or synthetic aliphatic carboxylic acids of from 10 to 22 carbon atoms, especially the fatty acids of triglyceride oils such as tallow, coconut oil and rape seed oil.

The soap which is most preferred is a soap derived from rape seed oil. When soap derived from tallow fatty acids is chosen, then fatty acids derived from tallow class fats, for example beef tallow, mutton tallow, lard, palm oil and some vegetable butters can be selected. Minor amounts of up to about 30%, preferably 10 to 20%, by weight of sodium soaps of nut oil fatty acids derived from nut oils, for example coconut oil and palm kernel oil, may be admixed with the sodium tallow soaps, to improve their lathering and solubility characteristics if desired. Whereas tallow fatty acids are predominantly $C_{14}$ and $C_{18}$ fatty acids, the nut oil fatty acids are of shorter chain length and are predominantly $C_{10}$-$C_{14}$ fatty acids.

Synthetic anionic non-soap detergent active compounds are usually water-soluble alkali metal salts of organic sulphates and sulphonates having alkyl radicals containing from about 8 to about 22 carbon atoms, the term alkyl being used to include the alkyl portion of higher aryl radicals.

Preferred examples of suitable anionic detergent compounds are sodium and potassium alkyl sulphates, especially those obtained by sulphating higher ($C_8$-$C_{18}$) alcohols produced for example from tallow or coconut oil; sodium, potassium and ammonium alkyl benzene sulphonates, particularly linear alkyl benzene sulphonates having from 10 to 16, especially from 11 to 13 carbon atoms in the alkyl chain; sodium alkyl glyceryl ether sulphates, especially those ethers of the higher alcohols derived from tallow or coconut oil and synthetic alcohols derived from petroleum; sodium coconut oil fatty acid monoglyceride sulphates and sulphonates; sodium and potassium salts of sulphuric acid esters of higher ($C_9$-$C_{18}$) fatty alcohol-alkylene oxide, particularly ethylene oxide, reaction products; the reaction products of fatty acids such as coconut fatty acids esterified with isethionic acid and neutralised with sodium hydroxide; sodium and potassium salts of fatty acid amides of methyl taurine; alkane monosulphonates such as those derived by reacting alpha-olefins ($C_8$-$C_{20}$) with sodium bisulphite and those derived by reacting paraffins with $SO_2$ and $Cl_2$ and then hydrolysing with a base to produce a random sulphonate; olefin sulphonates, which term is used to describe the material made by reacting olefins, particularly $C_{10}$-$C_{20}$ alpha-olefins, with $SO_3$ then neutralising and hydrolysing the reaction product; or mixtures thereof. The preferred anionic detergent compounds are sodium ($C_{11}$-$C_{15}$) alkyl benzene sulphonates and sodium ($C_{16}$-$C_{18}$) alkyl sulphates.

Examples of suitable nonionic detergent compounds which may be used include the reaction products of alkylene oxides, usually ethylene oxide, with alkyl ($C_6$-$C_{22}$) phenols, generally 2 to 25 EO, i.e. 2 to 25 units of ethylene oxide per molecule; the condensation products of aliphatic ($C_8$-$C_{25}$) primary or secondary linear or branched alcohols with ethylene oxide, generally 2 to 30 EO, and products made by condensation of ethylene oxide with the reaction products of propylene oxide and ethylenediamine. Other so-called nonionic detergent compounds include long-chain tertiary amine oxides, long-chain tertiary phosphine oxides and dialkyl sulphoxides.

Mixtures of detergent-active compounds, for example mixed anionic or mixed anionic and nonionic compounds, are preferably used in the detergent compositions.

Cationic, amphoteric or zwitterionic detergent-active compounds optionally can also be used in the detergent compositions, but this is not normally desired owing to their relatively high cost. If any cationic, amphoteric or zwitterionic detergent-active compounds are used, it is generally in small amounts in products based on the much more commonly used synthetic anion and/or nonionic detergent-active compounds.

The detergent active component of the detergent powder composition will generally comprise from 5 to 40%, preferably from 8 to 30% by weight of the composition, and can be incorporated into the composition by spray-drying, spray-on or as a separately prepared adjunct.

Other detergent adjuncts

Detergent compositions containing the antifoam ingredient of the invention can also contain other ingredients (adjuncts), which can include, bleaching materials, detergency builders as well as other adjuncts commonly employed in detergent products.

Bleaching materials

Bleaching materials include peroxy bleach compounds, such as inorganic persalts and organic peracids. Inorganic persalts can be used in combination with suitable transition metal catalysts or organic peracid precursors as activators for the persalt. Preferably, peroxy bleach compounds are employed together with an activator therefor.

The inorganic persalt, acts to release active oxygen in solution, and the activator therefor is usually an organic compound having one or more reactive acyl residues, which cause the formation of peracids, the latter providing a more effective bleaching action at a low temperature, that is, in the range from 20 to 60°C, than is possible with the inorganic persalt itself.

The ratio by weight of the peroxy bleach compound to the activator in the detergent composition may vary from 30:1 to about 1:1, preferably from 15:1 to 2:1.

Typical examples of suitable peroxy bleach compounds are inorganic persalts such as alkali metal perborates, both tetrahydrates and monohydrates, alkali metal percarbonates, persilicates and perphosphates and mixtures thereof. Sodium perborate is the preferred inorganic persalt, particularly sodium perborate monohydrate and sodium perborate tetrahydrate.

Activators for peroxy bleach compounds include:

a) N-diacylated and N,N'-polyacylated amines, for example N,N,N'N'-tetraacetyl methylenediamine and N,N,N'N'-tetraacetyl ethylenediamine, N,N-diacetylaniline, N,N-diacetyl-p-toluidine; 1,3-diacylated hydantoins such as, for example, 1,3-diacetyl-5,5-dimethyl hydantoin and 1,3-dipropionyl hydantoin; $\alpha$-acetoxy-(N,N')-polyacylmalonamide, for example $\alpha$-acetoxy-(N,N')-diacetylmalonamide;

b) N-alkyl-N-sulphonyl carbonamides, for example the compounds N-methyl-N-mesyl-acetamide, N-methyl-N-mesyl-benzamide, N-methyl-N-mesyl-p-nitrobenzamide and N-methyl-N-mesyl-p-methoxybenzamide;

c) N-acylated cyclic hydrazides, acylated triazones or urazoles, for example monoacetylmaleic acid hydrazide;

d) O,N,N-trisubstituted hydroxylamines, for example O-benzoyl-N,N-succinyl hydroxylamine, O-acetyl-N,N-succinyl hydroxylamine, O-p-methoxybenzoyl-N,N-succinyl hydroxylamine, O-p-nitrobenzoyl-N,N-succinyl hydroxylamine and O,N,N-triacetyl hyroxylamine;

e) N,N'-diacyl-sulphurylamides, for example N,N'-dimethyl-N,N'-diacetyl sulphurylamide and N,N'-diethyl-N,N'-dipropionyl sulphurylamide;

f) Triacylcyanurates, for example triacetyl cyanurate and tribenzoyl cyanurate;

g) Carboxylic acid anhydrides, for example benzoic anhydride, m-chloro-benzoic anhydride, phthalic anhydride and 4-chloro-phthalic anhydride.

h) Sugar esters, for example glucose pentaacetate;

i) Esters of sodium p-phenol sulphonate, for example sodium acetoxybenzene sulphonate, sodium benzoyloxybenzene sulphonate, and high acyl derivatives, for example linear and branched octanoyl and nonanoyl phenol sulphonic acid salts.

j) 1,3-diacyl-4,5-diacyloxy-imidazoline, for example 1,3-diformyl-4,5-diacetoxy-imidazolidine, 1,3-diacetyl-4,5-diacetoxy-imidazoline, 1,3-diacetyl-4,5-dipropionyloxy-imidazoline;

k) N,N'-polyacylated glycoluril, for example N,N,N'N'-tetraacetyl glycoluril and N,N,N'N'-tetrapropionylglycoluril;

l) Diacylated-2,5-diketopiperazine, for example 1,4-diacetyl-2,5-diketopiperazine, 1,4-dipropionyl-2,5-diketopiperazine and 1,4-dipropionyl-3,6-dimethyl-2,5-diketopiperazine;

m) Acylation products of propylenediurea or 2,2-dimethyl-propylenediurea (2,4,6,8-tetraazabicyclo-(3,3,1)-nonane-3,7-dione or its 9,9-dimethyl derivative), especially the tetraacetyl- or the tetrapropionyl-propylenediurea or their dimethyl derivatives;

n) Carbonic acid esters, for example the sodium salts of p-(ethoxycarbonyloxy)-benzoic acid and p-(propoxy-carbonyloxy)-benzene sulphonic acid.

The N-diacetylated and N,N'-polyacylated amines mentioned under (a) are of special interest, particularly N,N,N'N'-tetraacetyl ethylenediamine (TAED).

Mixtures of one or more of the forgoing activators can be employed in the bleaching compositions.

It is preferred to use the activator in granular form, especially when it is present in a finely divided form.

Specifically, it is preferred to employ an activator having an average particle size of less than 150 micrometers ($\mu$m), which gives significant improvement in bleach efficiency. The sedimentation losses, when using an activator with an average particle size of less than 150 $\mu$m, are substantially decreased. Even better bleach performance is obtained if the average particle size of the activator is less than 100 $\mu$m. However, too small a particle size gives increased decomposition, dust formation and handling problems, and although particle sizes below 100 $\mu$m can provide an improved bleaching efficiency, it is desirable that the activator should not have more than 20% by weight of particles with a size of less than 50 $\mu$m. On the other hand, the activator may have a certain amount of particles of a size greater than 150 $\mu$m, but it should not contain more than 5% by weight of particles >300 $\mu$m, and not more than 20% by weight of particles >150 $\mu$m. If needle-shaped crystalline activator particles are used, these sizes refer to the needle diameter. It is to be understood that these particle sizes refer to the activator present in the granules, and not to the granules themselves. The latter generally have on average a particle size of from 100 to 2000 $\mu$m, preferably 250 to 1000 $\mu$m. Up to 5% by weight of granules with a particle size of >1600 $\mu$m and up to 10% by weight of granules < 250 $\mu$m is tolerable. The granules incorporating the activator, preferably in this finely divided form, may be obtained by granulating the activator with a suitable carrier material, such as sodium tripolyphosphate and/or potassium tripolyphosphate. Other granulation methods, for example using organic and/or inorganic granulation aids, can also usefully be applied. The granules can be subsequently dried, if required. Generally, any granulation process is applicable, so long as the granule contains the activator, and so long as the other materials present in the granule do not inhibit the activator.

The bleaching material component when present will generally comprise from 1 to 30%, preferably from 5 to 20% by weight of the detergent composition.

## Detergency builders

Builders include soaps, inorganic and organic water-soluble builder salts, as well as various water-insoluble and so-called "seeded" builders, whose function is to soften hard water by solubilisation or by removal by other means (e.g. by sequestration, precipitation or ion exchange) of calcium and to a lesser extent magnesium salts responsible for water hardness, thereby improving detergency.

Soaps which can function as detergency builders are those as defined hereinbefore as capable of functioning also as detergent active compounds.

Inorganic detergency builders include, for example, water-soluble salts of phosphates, pyrophosphates, orthophosphates, polyphosphates, phosphonates, and polyphosphonates. Specific examples of inorganic phosphate builders include sodium and potassium tripolyphosphates, phosphate and hexametaphosphates. The polyphosphonates can specifically include, for example, the sodium and potassium salts of ethylene disphosphonic acid, the sodium and potassium salts of ethane 1-hydroxy-1,1-diphosphonic acid, and the sodium and potassium salts of ethane-1,1,2-triphosphonic acid. Sodium tripolyphosphate is an especially preferred, water-soluble inorganic builder.

Non-phosphorus-containing inorganic water-soluble sequestrants can also be selected for use as detergency builders. Specific examples of such non-phosphorus, inorganic builders include borate, silicate and aluminate salts. The alkali metal, especially sodium or potassium, salts are particularly preferred.

Organic non-phosphorus-containing, water-soluble detergency builders include, for example, the alkali metal, ammonium and substituted ammonium polyacetates, carboxylates, polycarboxylates, succinates, oxalates and polyhydroxysulphonates. Specific examples of the polyacetate and polycarboxylate builder salts include sodium, potassium, lithium, ammonium and substituted ammonium salts of ethylenediamine tetraacetic acid, nitrilotriacetic acid, oxydisuccinic acid, mellitic acid, benzene polycarboxylic acids, citric acid, carboxymethyoxysuccinic acid, carboxymethyoxymalonic acid and mixtures thereof.

Highly preferred organic water-soluble non-phosphorus-containing builders include sodium citrate, sodium oxydisuccinate, sodium mellitate, sodium nitrilotriacetate, and sodium ethylenediaminetetraacetate. Other builders can include organic polymers such as polyacrylates, maleate, acetal carboxylates and copolymers.

Another type of detergency builder material useful in the compositions and products of the invention comprise a water-soluble material capable of forming a water-insoluble reaction product with water hardness cations, such as alkali metal or ammonium salts of carbonate, bicarbonate and sesquicarbonate optionally in combination with a crystallisation seed which is capable of providing growth sites for said reaction product.

Other types of builder that can be used include various substantially water-insoluble materials which are capable of reducing the hardness content of laundering liquors by an ion-exchange process.

Examples of such ion-exchange materials are the complex aluminosilicates, i.e. zeolite-type materials, which are useful presoaking or washing adjuncts which soften water by removal of calcium ion. Both the naturally occurring and synthetic "zeolites", especially Zeolite A and hydrated Zeolite A materials, are useful as builders.

The detergency builder component when present will generally comprise from about 1% to 90%, preferably from about 5% to 75% by weight of the detergent composition.

## Other detergent adjuncts

Further detergent adjuncts which can optionally be employed in the detergent compositions of the invention include anti-redeposition agents such as sodium carboxymethyl-cellulose, polyvinyl pyrrolidone and the cellulose ethers such as methyl cellulose and ethyl hydroxyethyl cellulose; stabilisers such as ethylenediamine tetramethylene phosphonate and diethylenetriamine pentamethylene phosphonate; fabric-softening agents; inorganic salts such as sodium and magnesium sulphate; and - usually present in very minor amounts - optical brighteners, fluorescers, enzymes such as proteases and amylases, anticaking agents, thickeners, germicides and colourants.

Various detergency enzymes well-known in the art for their ability to degrade and aid in the removal of various soils and stains can also optionally be employed in the compositions according to this invention. Detergency enzymes are commonly used at concentrations of from about 0.1% to about 1.0% by weight of such compositions. Typical enzymes include the various proteases, lipases, amylases, and mixtures thereof, which are designed to remove a variety of soils and stains from fabrics.

It is also desirable to include one or more antideposition agents in the compositions of the invention, to decrease a tendency to form inorganic deposits on washed fabrics. The amount of any such antideposition agent when employed is normally from 0.1% to 5% by weight, preferably from 0.2% to 2.5% by weight of the composition. The preferred antideposition agents are anionic polyelectrolytes, especially polymeric aliphatic carboxylates, or organic phosphonates.

EP 0 206 522 B1

It may also be desirable to include in the detergent compositions an amount of an alkali metal silicate, particularly sodium ortho-, meta- or preferably neutral or alkaline silicate. The presence of such alkali metal silicates at levels of at least 1%, and preferably from 5% to 15% by weight of the product, is advantageous in decreasing the corrosion of metal parts in washing machines, besides providing some measure of building and giving processing benefits and generally improved powder properties. The more highly alkaline ortho- and meta-silicates would normally only be used at lower amounts within this range, in admixture with the neutral or alkaline silicates.

The detergent compositions of the invention are usually required to be alkaline, but not too strongly alkaline as this could result in fabric damage and also be hazardous for domestic use. In practice the compositions should preferably provide a pH of from about 8.5 to about 11 in use in the aqueous wash liquor. It is preferred in particular for domestic products to yield a pH of from about 9.0 to about 10.5, as lower pH values tend to be less effective for optimum detergency, and more highly alkaline products can be hazardous if misused. The pH is measured at the lowest normal usage concentration of 0.1% w/v of the product in water of 12°H (Ca) (French permanent hardness, calcium only) at 50°C so that a satisfactory degree of alkalinity can be assured in use at all normal product concentrations.

The total amount of detergent adjuncts that can be incorporated into the detergent compositions according to the invention will normally form the balance of the product after accounting for the antifoam ingredient and the detergent-active compound. The detergent adjuncts will accordingly form from 0 to 94.9% by weight of the product.

Use of Detergent Composition

The detergent composition can be employed in a normal domestic or other laundry or dishwashing process conveniently employing a washing machine. It is intended that the product is effective both in removing soil from dishes and other household implements or from fabrics being washed, and in conferring other attributes such as bleaching, perfuming and fabric softening as appropriate.

For most purposes, the detergent composition can be employed at a concentration of 0.05 to 5% by weight of the wash liquor. Preferably, the concentration in the wash is from 0.2 to 2%, most preferably from 0.3 to 1.5% by weight of the wash liquor.

EXAMPLES

The invention is illustrated by the following Examples:

Examples 1 to 6

In each of Examples 1 to 6, antifoam particles, suitable for incorporation into a detergent powder composition, were produced in accordance with the following process:

(a) a molten mixture of paraffin wax having a melting point of from 54° to 56°C and hydrophobic silica was mixed with sodium tripolyphosphate and finely divided gelatinised starch and then spray cooled to form particles of solid core material;

(b) the particles of core material were then sprayed with a mixture of non-volatile silicone oil and hydrophobic silica;

(c) the particles of core material so impregnated or coated were subsequently sprayed with a further mixture of the paraffin wax having a melting point of 54° to 56°C and hydrophobic silica to provide a coating to the particles which was impervious to the silicone oil trapped within, while the particles were in the dry state, yet which would allow water to penetrate when contacted with water, so as to disrupt the particles under wash conditions.

The antifoam particles had the following compositions:

9

| | Antifoam ingredients (% by weight) | | | | | |
|---|---|---|---|---|---|---|
| | 1 | 2 | 3 | 4 | 5 | 6 |
| <u>Core</u> | | | | | | |
| sodium tripolyphosphate | 28 | 28 | 28 | 28 | 28 | 28 |
| paraffin wax: 54–56°C (ex CFR) 90.7% hydrophobic silica* 9.3% | 10 | 10 | 10 | 10 | 10 | 10 |
| gelatinised starch (AMIGEL 12014: Produits du Mais) | 23 | 23 | 23 | 23 | 23 | 23 |
| <u>Silicone compound carried by core</u> | | | | | | |
| silicone oil 47v 100: (Rhone Poulenc) 90% hydrophobic silica* 10% | – | 25 | – | – | – | – |
| silicone oil 47v 5000: (Rhone Poulenc) 90% hydrophobic silica* 10% | – | – | 25 | – | – | – |
| silicone 47v 12500: (Rhone Poulenc) 90% hydrophobic silica* 10% | – | – | – | – | – | 25 |
| silicone compound DB 100: (Dow Corning) | 25 | – | – | – | – | – |
| silicone compound Silcolapse 430: (ICI) | – | – | – | 25 | – | – |
| silicone compound EP 6508: (ICI) | – | – | – | – | 25 | – |
| <u>Wax outer coating</u> | | | | | | |
| paraffin wax 54–56°C 90% hydrophobic silica* 10% | 14 | 14 | 14 | 14 | 14 | 14 |
| * hydrophobic silica is Sipernat D10 ex Degussa | | | | | | |

Examples 7 to 10

In each of Examples 7 to 10, antifoam particles, suitable for incorporation into a detergent powder composition, were produced in accordance with the following process:

(a) spheroids of solidified paraffin wax having a melting point of from 54° to 56°C and hydrophobic silica were mixed with finely divided gelatinised starch to form particles of solid core material;

(b) the particles of core material were then sprayed with a mixture of non-volatile silicone oil and hydrophobic silica;

(c) the particles of core material so impregnated or coated were subsequently sprayed with a further mixture of the paraffin wax having a melting point of 54° to 56°C and hydrophobic silica to provide a coating to the particles which was impervious to the silicone oil trapped within, while the particles were in the dry state, yet which would allow water to penetrate when contacted with water, so as to disrupt the particles under wash conditions;

(d) the coated particles so obtained were finally dusted with finely divided sucrose.

The antifoam particles had the following compositions:

Examples 7 to 10

| | Antifoam ingredients (%-by weight) | | | |
|---|---|---|---|---|
| | 7 | 8 | 9 | 10 |
| <u>Core</u> | | | | |
| paraffin wax 54–56°C (ex CFR) 90% hydrophobic silica* 10% | 18 | 16.4 | 16.4 | 16.7 |
| gelatinised starch | 43 | 39.1 | 39.1 | 35.8 |
| <u>Silicone oil coating</u> | | | | |
| silicone compound DB 100 | 25 | – | – | – |
| silicone oil 47v 100 90% hydrophobic silica* 10% | – | 22.7 | – | – |
| silicone oil 47v 1000 90% hydrophobic silica* 10% | – | – | 22.7 | 20.8 |
| <u>Wax outer coating</u> | | | | |
| paraffin wax 40–42% 90% hydrophobic silica* 10% | – | – | – | 10 |
| paraffin wax 54–56°C hydrophobic silica* | 14 | – | – | – |
| <u>Final dusting</u> | | | | |
| sugar | – | 21.8 | 21.8 | 16.7 |
| * hydrophobic silica is Sipernat D10 ex Degussa | | | | |

<u>Examples 11 & 12</u>

In each of Examples 11 and 12, antifoam particles were produced in accordance with the following process:

(a) a molten mixture of paraffin wax having a melting point of 54° to 56°C together with non-volatile silicone oil and hydrophobic silica was mixed with finely divided gelatinised starch and then spray cooled to form particles of solid core material;

(b) the particles of core material so obtained were subsequently sprayed with a molten mixture of paraffin wax having a melting point of 54° to 56°C and hydrophobic silica to provide a coating to the particles which was impervious to the silicone oils trapped within while the particles were in the dry state, yet which would allow water to penetrate when contacted with water so as to disrupt the particles under wash conditions.

The antifoam particles had the following compositions:

Examples 11 & 12

| | Antifoam ingredients (% by weight) | |
|---|---|---|
| | 11 | 12 |
| <u>Core</u> | | |
| gelatinised starch | 40 | 40 |
| silicone oil 47v 1000 90% hydrophobic silica* 10% | 25 | 25 |
| paraffin wax 54–56°C 90% hydrophobic silica* 10% | – | 21 |
| <u>Wax outer coating</u> | | |
| paraffin wax 54–56°C 90% hydrophobic silica* 10% | 35 | 14 |
| * hydrophobic silica is Sipernat D10 ex Degussa | | |

The performance of the antifoam particles prepared in each of the Examples 1 to 12 was investigated before and after storage in the following experimental detergent powder formulation:

| Ingredient | % by weight |
|---|---|
| Sodium alkylbenzene sulphonate | 7.2 |
| $C_{13-15}$ ethoxylated fatty alcohol (7EO) | 3.6 |
| Soap | 0.5 |
| Antifoam ingredient | * |
| TAED, perborate, STP, enzyme, Dequest & water | to 100 |
| * Examples 1 to 7: 1.19% Examples 8 & 9: 1.31% Example 10: 1.43% Examples 11 & 12: 1.19% | |

Foam height measurements

In a series of washing experiments, a dose of 234g of each of the above powders was added separately to 20 litres cold water having a hardness of 10°FH in a top loading drum washing machine (Brandt 433). A 4kg load of clean cotton fabric was placed in the washing machine on each occasion and a hot wash cycle was initiated starting from cold. Foam heights were measured as the water temperature was increased during the main wash cycle.

Of each powder formulation, some was freshly prepared and some had been stored for 60 hours at 45°C in unlaminated E3 cardboard cartons, or for 15 days at 37°C at 75% in similar cartons.

The results obtained are tabulated below:

| | Examples | | | | | |
|---|---|---|---|---|---|---|
| | 1 | 2 | 3 | 4 | 5 | 6 |
| Mean lather heights at 30°C | | | | | | |
| a) Fresh powder | 0 | 4 | 0 | 0 | 0 | 0 |
| b) Stored powder (60 hours: 45°C/75% RH) | 4 | 8 | 2 | 8 | 1 | 1 |
| c) Stored powder (15 days: 37°C/75% RH) | 6 | 6 | 4 | 1 | 5 | 2 |
| d) Stored powder (1 month: 37°C/75% RH) | 6 | 20 | 22 | 5 | 0.5 | 1 |
| Mean lather heights at 40°C | | | | | | |
| a) Fresh powder | 3 | 14 | 0 | 0 | 0 | 0 |
| b) Stored powder (60 hours: 45°C/75% RH) | 12 | 27 | 12 | 13 | 5 | 5 |
| c) Stored powder (15 days: 37°C/75% RH) | 21 | 24 | 9 | 6 | 12 | 5 |
| d) Stored powder (1 month: 37°C/75% RH) | 26 | 26 | 24 | 8 | 4 | 4 |

| | Examples | | | | | |
|---|---|---|---|---|---|---|
| | 1 | 2 | 3 | 4 | 5 | 6 |
| Mean lather heights at 60°C | | | | | | |
| a) Fresh powder | 3 | 5 | 0 | 1 | 1 | 0 |
| b) Stored powder (60 hours: 45°C/75% RH) | 6 | 2 | 7 | 0 | 2 | 3 |
| c) Stored powder (15 days: 37°C/75% RH) | 4 | 5 | 3 | 2 | 2 | 2 |
| d) Stored powder (1 month: 37°C/75% RH) | 2 | 0 | 5 | 2 | 0.5 | 1 |
| Mean lather heights at 90°C | | | | | | |
| a) Fresh powder | 8 | 15 | 4 | 6 | 2 | 1 |
| b) Stored powder (60 hours: 45°C/75% RH) | 14 | 13 | 9 | 7 | 4 | 3 |
| c) Stored powder (15 days: 37°C/75% RH) | 10 | 17 | 7 | 4 | 7 | 2 |
| d) Stored powder (1 month: 37°C/75% RH) | 3 | 6 | 10 | 4 | 5 | 4 |

| | Examples | | | |
|---|---|---|---|---|
| | 7 | 8 | 9 | 10 |
| Mean lather heights at 30°C | | | | |
| a) Fresh powder | 0 | 1 | 0 | 0 |
| b) Stored powder (60 hours: 45°C/75% RH) | 7 | 2 | 0 | 4 |
| c) Stored powder (15 days: 37°C/75% RH) | 3 | 1 | 3 | 6 |
| Mean lather heights at 40°C | | | | |
| a) Fresh powder | 2 | 5 | 0 | 1 |
| b) Stored powder (60 hours: 45°C/75% RH) | 15 | 2 | 4 | 4 |
| c) Stored powder (15 days: 37°C/75% RH) | 3 | 5 | 5 | 5 |
| Mean lather heights at 60°C | | | | |
| a) Fresh powder | 0 | 2 | 2 | 1 |
| b) Stored powder (60 hours: 45°C/75% RH) | 2 | 2 | 3 | 1 |
| c) Stored powder (15 days: 37°C/75% RH) | 0 | 1 | 1 | 2 |
| Mean lather heights at 90°C | | | | |
| a) Fresh powder | 2 | 8 | 8 | 3 |
| b) Stored powder (60 hours: 45°C/75% RH) | 7 | 6 | 12 | 3 |
| c) Stored powder (15 days: 37°C/75% RH) | 0 | 2 | 3 | 5 |

| | Examples | |
|---|---|---|
| | 11 | 12 |
| **Mean lather heights at 30°C** | | |
| a) Fresh powder | 0 | 0 |
| b) Stored powder (60 hours at 45°C) | 0 | 1 |
| c) Stored powder (15 days at 37°C) | 8 | 4 |
| **Mean lather heights at 40°C** | | |
| a) Fresh powder | 0 | 0 |
| b) Stored powder (60 hours at 45°C) | 2 | 5 |
| c) Stored powder (15 days at 37°C) | 8 | 9 |
| **Mean lather heights at 60°C** | | |
| a) Fresh powder | 0 | 0 |
| b) Stored powder (60 hours at 45°C) | 0 | 1 |
| c) Stored powder (15 days at 37°C) | 1 | 1 |
| **Mean lather heights at 90°C** | | |
| a) Fresh powder | 0 | 1 |
| b) Stored powder (60 hours: 45°C/75% RH) | 1 | 4 |
| c) Stored powder (15 days: 37°C/75% RH) | 1 | 1 |

## Claims

1. A particulate antifoam ingredient suitable for incorporation into a detergent powder composition, said ingredient comprising particles which are capable of swelling, dissolving or disintegrating on contact with water, said particles comprising a core carrying a low-temperature-sensitive antifoam active substance, and also including high-temperature sensitive antifoam active substance which particles have a coating surrounding the core of material, the coating comprising a mixture of wax and hydrophobic silica providing a coating which is impervious while in the dry state, yet which is capable of disruption on contact with water thereby to release the antifoam active substance(s), the particules having a mean particle diameter of up to 2,000 μm.

2. An antifoam ingredient according to claim 1, in which the core comprises starch.

3. An antifoam ingredient according to claim 1 or 2, in which the core comprises sodium perborate monohydrate.

4. An antifoam ingredient according to claim 1, 2 or 3, in which the core comprises a zeolite cation exchanger.

5. An antifoam ingredient according to any preceding claim, in which the core comprises a water-soluble inorganic salt chosen from sodium tripolyphosphate, sodium sulphate and mixtures thereof.

6. An antifoam ingredient according to any preceding claim, in which the core comprises, as a high-temperature-sensitive antifoam active substance, paraffin wax having a melting point of from 45 to 80°.

7. An antifoam ingredient according to any preceding claim, in which the core further comprises hydrophobic silica.

8. An antifoam ingredient according to any preceding claim, in which the core comprises, as a low-temperature-sensitive antifoam active substance, an oily antifoam active substance which is normally liquid at temperatures of from 20° to 50°C.

9. An antifoam ingredient according to claim 8, in which the oily antifoam active substance is chosen from a silicone oil and a normally liquid hydrocarbon or mixtures thereof.

10. An antifoam ingredient according to any preceding claim, in which the wax of the coating surrounding the core is a paraffin wax having a melting point of from 45 to 80°C.

11. An antifoam ingredient according to any preceding claim which has a mean particle diameter of from 400μm to 2,000μm.

12. An antifoam ingredient according to any preceding claim which has a mean particle diameter of from 800μm to 2,000μm.

13. A process for manufacturing the antifoam ingredient according to claims 1, 2 and 5 to 12 which process comprises the steps of:

(i) spraying a molten mixture of wax having a melting point of from 45 to 80°C together with a hydrophobic silica onto finely divided water-soluble salt chosen from sodium tripolyphosphate, sodium sulphate or mixtures thereof, and thereafter adding finely divided gelatinised starch with mixing to obtain core particles;

(ii) spraying the core particles so obtained with an oily antifoam active substance; and

(iii) subsequently spraying the particles with a mixture of wax and hydrophobic silica to form the coating, thereby to form the particulate antifoam ingredient.

14. A process for manufacturing the antifoam ingredient according to claims 1, 3 and 6 to 12 which process comprises the steps of:

(i) spraying a molten mixture of wax having a melting point of from 45 to 80°C together with hydrophobic silica onto finely divided sodium perborate monohydrate to obtain core particles;

(ii) spraying the core particles so obtained with an oily antifoam active substance; and

(iii) subsequently spraying the particles with a mixture of wax and hydrophobic silica to form the coating, thereby to form the particulate antifoam ingredient.

15. A process for manufacturing the antifoam ingredient according to claims 1, 4 and 6 to 12 which process comprises the steps of:

(i) spraying a molten mixture of wax having a melting point of from 45 to 80°C together with hydrophobic silica onto zeolite cation exchanger to obtain core particles;

(ii) spraying the core particles so obtained with an oily antifoam active substance; and

(iii) subsequently spraying the particles with a mixture of wax and hydrophobic silica to form the coating, thereby to form the particulate antifoam ingredient.

16. A process for manufacturing the antifoam ingredient according to claims 1, 2 and 6 to 12 which process comprises the steps of:

(i) spray-cooling a molten mixture of wax having a melting point of from 45 to 80°C together with hydrophobic silica to form spheroids of solidified wax and silica and then mixing said spheroids with finely divided gelatinised starch to obtain core particles;

(ii) spraying the core particles so obtained with an oily antifoam active substance and

(iii) subsequently spraying the particles with a mixture of wax and hydrophobic silica to form the coating, thereby to form the particulate antifoam ingredient.

17. A process according to any one of claims 13 to 16 wherein the said oily antifoam active substance is chosen from silicone oil and a normally liquid hydrocarbon or mixtures thereof.

18. A detergent powder composition which comprises from 0.1 to 5% by weight of the antifoam ingredient according to any of claims 1 to 12, and from 2 to 70% by weight of detergent active compound, the balance of the detergent composition comprising detergent adjuncts.

19. A detergent powder composition according to claim 18, in which the detergent adjuncts comprise a detergency builder which forms from 5 to 60% by weight of the composition.

## Patentansprüche

1. Teilchenförmiger Antischaumbestandteil geeignet für Einverleibung in eine Reinigungsmittelpulverzusammensetzung, wobei der Bestandteil Teilchen umfaßt, die in der Lage sind zu quellen, sich aufzulösen oder auseinanderzufallen bei Kontakt mit Wasser, wobei die Teilchen umfassen einen Kern, der eine Niedertemperatur-empfindliche antischaumaktive Substanz trägt und auch enthält eine Hochtemperatur-empfindliche antischaumaktive Substanz und wobei die Teilchen ferner einen Überzug um das Kernmaterial aufweisen und der Überzug eine Mischung aus Wachs und hydrophober Kieselsäure umfaßt, so daß ein Überzug gebildet wird, der im trockenen Zustand undurchlässig ist, jedoch aufbrechen kann in Berührung mit Wasser und dabei die antischaumaktive Substanz(en) freisetzt, wobei die Teilchen einen mittleren Teilchendurchmesser von bis zu 2000 µm besitzen.

2. Antischaumbestandteil gemäß Anspruch 1, in welchem der Kern Stärke umfaßt.

3. Antischaumbestandteil gemäß Anspruch 1 oder 2, in welchem der Kern Natriumperboratmonohydrat umfaßt.

4. Antischaumbestandteil gemäß Anspruch 1, 2 oder 3, in welchem der Kern einen Zeolith-Kationenaustauscher umfaßt.

5. Antischaumbestandteil gemäß einem der vorgehenden Ansprüche, in welchem der Kern ein wasserlösliches anorganisches Salz, ausgewählt unter Natriumtripolyphosphat, Natriumsulfat und Mischungen davon umfaßt.

6. Antischaumbestandteil gemäß einem der vorgehenden Ansprüche, in welchem der Kern als Hochtemperatur-empfindliche antischaumaktive Substanz Paraffinwachs mit einem Schmelzpunkt von 45 bis 80°C umfaßt.

7. Antischaumbestandteil gemäß einem der vorgehenden Ansprüche, in welchem der Kern weiterhin eine hydrophobe Kieselsäure umfaßt.

8. Antischaumbestandteil gemäß einem der vorgehenden Ansprüche, in welchem der Kern als Niedertemperatur-empfindliche antischaumaktive Substanz eine ölige antischaumaktive Substanz, die normalerweise bei einer Temperatur von 20 bis 50°C flüssig ist, umfaßt.

9. Antischaumbestandteil gemäß Anspruch 8, in welchem die ölige antischaumaktive Substanz ausgewählt ist unter einem Silikonöl und einem normalerweise flüssigen Kohlenwasserstoff oder Mischungen daraus.

10. Antischaumbestandteil gemäß einem der vorgehenden Ansprüche, in welchem das Wachs des den Kern umgebenden Überzugs ein Paraffinwachs mit einem Schmelzpunkt von 45 bis 80°C ist.

11. Antischaumbestandteil gemäß einem der vorgehenden Ansprüche, welcher einen mittleren Teilchendurchmesser von 400 bis 2000 µm besitzt.

12. Antischaumbestandteil gemäß einem der vorgehenden Ansprüche, welcher einen mittleren Teilchendurchmesser von 800 bis 2000 µm besitzt.

13. Verfahren zur Herstellung des Antischaumbestandteils gemäß einem der Ansprüche 1, 2 und 5 bis 12, umfassend die Stufen:

(i) Sprühen einer geschmolzenen Mischung von Wachs mit einem Schmelzpunkt von 45 bis 80°C zusammen mit einer hydrophoben Kieselsäure auf ein fein zerteiltes, wasserlösliches Salz, ausgewählt unter Natriumtripolyphosphat, Natriumsulfat oder Mischungen davon und danach Zugeben von fein zerteilter gelatinierter Stärke unter Vermischen zur Herstellung von Kernteilchen;

(ii) Besprühen der so erhaltenen Kernteilchen mit einer öligen antischaumaktiven Substanz; und

(iii) anschließend Besprühen der Teilchen mit einer Mischung von Wachs und hydrophober Kieselsäure zur Bildung des Überzugs und dadurch zur Bildung des teilchenförmigen Antischaumbestandteils.

14. Verfahren zur Herstellung eines Antischaumbestandteils gemäß Ansprüchen 1, 3 und 6 bis 12, umfassend die Stufen:

(i) Sprühen einer geschmolzenen Mischung von Wachs mit einem Schmelzpunkt von 45 bis 80°C zusammen mit hydrophober Kieselsäure auf ein fein zerteiltes Natriumperboratmonohydrat zur Herstellung der Kernteilchen;

(ii) Besprühen der so erhaltenen Kernteilchen mit einer öligen antischaumaktiven Substanz; und

(iii) anschließend Besprühen der Teilchen mit einer Mischung von Wachs und hydrophober Kieselsäure zur Bildung des Überzugs und dadurch zur Bildung des teilchenförmigen Antischaumbestandteils.

15. Verfahren zur Herstellung des Antischaumbestandteils gemäß Ansprüchen 1, 4 und 6 bis 12, umfassend die Schritte:

(i) Sprühen einer geschmolzenen Mischung von Wachs mit einem Schmelzpunkt von 45 bis 80°C zusammen mit hydrophober Kieselsäure auf einen Zeolith-Kationenaustauscher zur Herstellung von Kernteilchen;

(ii) Besprühen der so erhaltenen Kernteilchen mit einer öligen antischaumaktiven Substanz; und

(iii) anschließend Besprühen der Teilchen mit einer Mischung von Wachs und hydrophober Kieselsäure zur Bildung des Überzugs und dadurch zur Bildung des teilchenförmigen Antischaumbestandteils.

16. Verfahren zur Herstellung des Antischaumbestandteils gemäß Ansprüchen 1, 2 und 6 bis 12, umfassend die Schritte:

(i) Sprüh-Kühlen einer geschmolzenen Mischung von Wachs mit einem Schmelzpunkt von 45 bis 80°C zusammen mit hydrophober Kieselsäure zur Bildung von Spheroiden von verfestigtem Wachs und Kieselsäure und dann Vermischen dieser Spheroide mit fein zerteilter gelatinierter Stärke zur Herstellung von Kernteilchen;

(ii) Besprühen der so erhaltenen Kernteilchen mit einer öligen antischaumaktiven Substanz und

(iii) anschließend Besprühen der Teilchen mit einer Mischung von Wachs und hydrophober Kieselsäure zur Bildung des Überzugs und dadurch zur Bildung des teilchenförmigen Antischaumbestandteils.

17. Verfahren gemäß einem der Ansprüche 13 bis 16, worin die ölige antischaumaktive Substanz ausgewählt ist unter Silikonöl und einem normalerweise flüssigen Kohlenwasserstoff oder Mischungen daraus.

18. Reinigungsmittelpulver-Zusammensetzung, umfassend 0,1 bis 5 Gew.-% des Antischaumbestandteils gemäß einem der Ansprüche 1 bis 12 und 2 bis 70 Gew.-% einer Detergensaktiven Verbindung, wobei der Rest der Reinigungsmittelzusammensetzung Reinigungsmittelzusatzstoffe umfaßt.

19. Reinigungsmittelpulver-Zusammensetzung gemäß Anspruch 18, in welchem die Reinigungsmittelzusatzstoffe einen Detergensaufbaustoff in einer Menge von 5 bis 60 Gew.-% der Zusammensetzung umfassen.

**Revendications**

1. Ingrédient anti-mousse en particules approprié à l'incorporation dans une composition de poudre détergente, ledit ingrédient comprenant des particules qui sont capables de se gonfler, de se dissoudre ou de se désintégrer au contact avec l'eau, lesdites particules comprenant un noyau portant une substance active anti-mousse sensible aux basses températures, et incluant également une substance active anti-mousse sensible aux hautes températures, lesquelles particules ont un revêtement entourant le noyau de matière, le revêtement comprenant un mélange de cire et de silice hydrophobe fournissant un revêtement qui est imperméable à l'état sec, mais qui est peut-être détruit au contact avec l'eau pour libérer ainsi la(les) substance(s) active(s) anti-mousse, les particules ayant un diamètre particulaire moyen allant jusqu'à 2000 µm.

2. Ingrédient anti-mousse selon la revendication 1, dans lequel le noyau comprend de l'amidon.

3. Ingrédient anti-mousse selon la revendication 1 ou 2, dans lequel le noyau comprend du perborate de sodium monohydraté.

4. Ingrédient anti-mousse selon la revendication 1, 2 ou 3, dans lequel le noyau comprend un échangeur de cations zéolithe.

5. Ingrédient anti-mousse selon l'une quelconque des revendications précédentes, dans lequel le noyau comprend un sel inorganique soluble dans l'eau choisi entre le tripolyphosphate de sodium, le sulfate de sodium et leurs mélanges.

6. Ingrédient anti-mousse selon l'une quelconque des revendications précédentes, dans lequel le noyau comprend, comme substance active anti-mousse sensible aux hautes températures, de la cire de paraffine ayant un point de fusion compris entre 45 et 80°C.

7. Ingrédient anti-mousse selon l'une quelconque des revendications précédentes, dans lequel le noyau comprend en outre de la silice hydrophobe.

8. Ingrédient anti-mousse selon l'une quelconque des revendications précédentes, dans lequel le noyau comprend, comme substance active anti-mousse sensible aux basses températures, une substance active anti-mousse huileuse qui est normalement liquide aux températures comprises entre 20° et 50°C.

9. Ingrédient anti-mousse selon la revendication 8, dans lequel la substance active anti-mousse huileuse est choisie entre une huile de silicone et un hydrocarbure normalement liquide ou des mélanges de ces corps.

10. Ingrédient anti-mousse selon l'une quelconque des revendications précédentes, dans lequel la cire du revêtement entourant le noyau est une cire de paraffine ayant un point de fusion compris entre 45 et 80°C.

11. Ingrédient anti-mousse selon l'une quelconque des revendications précédentes qui a un diamètre particulaire moyen compris entre 400 μm et 2000 μm.

12. Ingrédient anti-mousse selon l'une quelconque des revendications précédentes qui a un diamètre particulaire moyen compris entre 800 μm et 2000 μm.

13. Procédé de préparation de l'ingrédient anti-mousse selon les revendications 1 et 5 à 12, procédé comprenant les étapes de:

(i) pulvérisation d'un mélange fondu de cire ayant un point de fusion compris entre 45 et 80°C avec une silice hydrophobe sur un sel soluble dans l'eau finement divisé choisi entre le tripolyphosphate de sodium, le sulfate de sodium ou leurs mélanges, puis addition d'amidon gélatinisé finement divisé tout en mélangeant pour obtenir les particules du noyau;

(ii) pulvérisation sur les particules du noyau ainsi obtenues d'une substance active anti-mousse huileuse; et

(iii) ensuite pulvérisation sur les particules d'un mélange de cire et de silice hydrophobe pour former le revêtement, afin de former ainsi l'ingrédient anti-mousse en particules.

14. Procédé de préparation de l'ingrédient anti-mousse selon les revendications 1, 3 et 6 à 12, procédé comprenant les étapes de:

(i) pulvérisation d'un mélange fondu de cire ayant un point de fusion compris entre 45 et 80°C avec de la silice hydrophobe sur du perborate de sodium monohydraté finement divisé pour obtenir les particules du noyau;

(ii) pulvérisation sur les particules du noyau ainsi obtenues d'une substance active anti-mousse huileuse; et

(iii) ensuite pulvérisation sur les particules d'un mélange de cire et de silice hydrophobe pour former le revêtement, afin de former ainsi l'ingrédient anti-mousse en particules.

15. Procédé de préparation de l'ingrédient anti-mousse selon les revendications 1, 4 et 6 à 12, procédé comprenant les étapes de:

(i) pulvérisation d'un mélange fondu de cire ayant un point de fusion compris entre 45 et 80°C avec de la silice hydrophobe sur un échangeur de cations zéolithe pour obtenir les particules du noyau;

(ii) pulvérisation sur les particules du noyau ainsi obtenues d'une substance active anti-mousse huileuse; et

(iii) ensuite pulvérisation sur les particules d'un mélange de cire et de silice hydrophobe pour former le revêtement, afin de former ainsi l'ingrédient anti-mousse en particules.

16. Procédé de préparation de l'ingrédient anti-mousse selon les revendications 1, 2 et 6 à 12, procédé comprenant les étapes de:

(i) refroidissement par aspersion d'un mélange fondu de cire ayant un point de fusion compris entre 45 et 80°C avec de la silice hydrophobe pour former des sphéroïdes de cire solidifiée et de silice puis mélange desdits sphéroïdes avec de l'amidon gélatinisé finement divisé pour obtenir les particules de noyau;

(ii) pulvérisation sur les particules du noyau ainsi obtenues d'une substance active anti-mousse et mélange de cire et de silice hydrophobe pour former le revêtement, afin de former ainsi l'ingrédient anti-mousse en particules.

17. Procédé selon l'une quelconque des revendications 13 à 16 dans lequel ladite substance active anti-mousse huileuse est choisie entre l'huile de silicone et un hydrocarbure normalement liquide ou leurs mélanges.

18. Composition de poudre détergente qui comprend de 0,1 à 5% en poids de l'ingrédient anti-mousse selon l'une quelconque des revendications 1 à 12, et de 2 à 70% en poids de composé actif détergent, le reste de la composition détergente comprenant des additifs de détergence.

19. Composition de poudre détergente selon la revendication 18, dans laquelle les additifs de détergence comprennent un auxiliaire de détergence qui forme de 5 à 60% en poids de la composition.